(19) Europäisches Patentamt
European Patent Office
Office européen des brevets

(11) **EP 2 007 624 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(21) Anmeldenummer: **06741675.0**

(22) Anmeldetag: **30.06.2006**

(51) Int Cl.:
***B64C 31/036*** *(2006.01)*     ***B64D 17/02*** *(2006.01)*
***B64D 17/34*** *(2006.01)*

(86) Internationale Anmeldenummer:
**PCT/CH2006/000350**

(87) Internationale Veröffentlichungsnummer:
**WO 2007/107018 (27.09.2007 Gazette 2007/39)**

(54) **AUTONOME STRATOSPHÄREN-PLATFORM**

AUTONOMOUS STRATOSPHERE PLATFORM

PLATEFORME STRATOSPHERIQUE AUTONOME

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.03.2006 CH 437062006**

(43) Veröffentlichungstag der Anmeldung:
**31.12.2008 Patentblatt 2009/01**

(73) Patentinhaber: **iii-solutions GmbH**
**8152 Glattbrugg (CH)**

(72) Erfinder: **REINHARD, Andreas**
**CH-8001 Zürich (CH)**

(74) Vertreter: **Felber, Josef et al**
**Felber & Partner AG**
**Dufourstrasse 116**
**8034 Zürich (CH)**

(56) Entgegenhaltungen:
**DE-A1- 4 336 056**     **US-A- 3 773 284**
**US-A1- 2005 230 555**

**Beschreibung**

Die vorliegende Erfindung bezieht sich auf eine vorzugsweise in der Stratosphäre lokalisierte Station zum Tragen von Nutzlasten und zum Empfangen und Senden von Funksignalen nach dem Oberbegriff des Patentanspruches 1.

Solche Stationen sind an sich bekannt, und werden meist von Aerostaten getragen oder durch geeignete bemannte oder unbemannte Flugzeuge getragen und transportiert. Von deren Instrumentierung abgesehen, sind solche Transportmittel aufwendig im Bau und kostspielig im Betrieb.

Ebenso ist aus WO 03/018401 oder z.B. US 2005/02 3555 eine durch einen Gleitschirm getragene Instrumentierung bekannt, welche sich rechnergesteuert auf einer beispielsweise vorgegebenen Flugbahn bewegt. Eine solche Einrichtung kann jedoch nicht die Anforderungen einer auf einer bestimmten Höhenfläche lokalisierten Station erfüllen, da Gleit- und Fallschirme in der beschriebenen Art prinzipiell nach unten gerichtete Flugbahnen verfolgen.

Die Aufgabe der vorliegenden Erfindung ist es, eine Plattform, fortan kurz "Kapsel" genannt, zu schaffen, welche ohne Fremdenergie in der Lage ist, eine Nutzlast zu tragen und dabei eine vorgegebene Höhe mindestens anzufliegen und nach Möglichkeit zu halten, aber auch sich gezielt zu verschieben. Die Lösung der gestellten Aufgabe ist wiedergegeben im kennzeichnenden Teil des Patentanspruches 1 hinsichtlich der wesentlichen Merkmale, in den weiteren Ansprüchen hinsichtlich weiterer vorteilhafter Ausgestaltungen.

Die erfinderische Idee beruht dabei auf der Erkenntnis, dass die Tropopause sehr oft als Trennfläche in Erscheinung tritt für die Windverhältnisse in der Stratosphäre und jene in der Troposphäre; mit Windverhältnissen ist jeweils der Windvektor nach Richtung und Stärke angesprochen. Selbstverständlich kommt hier nicht nur die Tropopause als Trennfläche in Betracht. Jede Höhendifferenz, über welcher ein Windgradient vektorieller Hinsicht feststellbar ist, gestattet den Einsatz der erfindungsgemässen Vorrichtung.

Daher gehört zur Vorrichtung erfindungswesentlich einerseits ein Auftrieb und Vortrieb erzeugender Tragflügel, der in der oberen verwendeten Windschicht operiert, anderseits ein als Windanker wirkender Flügel, der in der unteren Windschicht eingesetzt ist. Als genannter Tragflügel ist beispielsweise ein Gleitschirm vorzusehen, als Windanker beispielsweise ein als Bremse wirkender Rundschirm, dessen Entfaltungsgrad steuerbar ist. Als Windanker ist jedoch ebenfalls Gleitschirm, oder allgemeiner, ein steuerbarer Flügel einsetzbar. Als drittes Element tritt dazu eine Vorrichtung, welche gestattet, innerhalb der atmosphärischen Gegebenheiten zu sondieren auf welchen Höhenflächen die Bedingungen für einen möglichst günstigen Windgradienten nach Richtung und Stärke vorliegen. Zu diesem Zwecke sind Sondiergleitschirme oder, allgemeiner, Sondierflügel mit Auftrieb vorgesehen und ebenso Sondier-Ankerschirme für die unter der Kapsel liegenden Luftschichten. Anstelle dieser aerodynamischen Körper kann auch ein LIDAR Doppler-System eingesetzt werden (LIDAR = Light Detection And Ranging), mit dessen Resultaten Richtung und Höhenlage von Windströmungen ermittelt werden kann. Allgemeiner gesprochen: ein optoelektrnisches System.

Mit dem Tragflügel verbunden, also direkt an diesem angehängt oder mittels eines Seils wählbarer Länge, ist die genannte Kapsel, welche einerseits die nötigen elektrischen und elektronischen Steuerelemente einschliesslich eines Rechners enthält, gespeist von einer autarken Stromversorgung, anderseits als Höhenplattform für beispielsweise wissenschaftliche Experimente, für elektronische Kommunikationsmittel und ähnliche Aufgaben eingesetzt werden kann.

Anhand der beigefügten Zeichnung wird die Erfindung näher erläutert. Es zeigen

Fig. 1a-d    Windvektoren und deren Differenzvektoren,

Fig. 2    eine schematische Darstellung eines ersten Ausfüh- rungsbeispiels,

Fig. 3    ein schematische Darstellung eines Steuer- und An- triebsorgans für einen Tragschirm,

Fig. 4    eine schematische Darstellung einer Kapsel,

Fig. 5    eine schematische Darstellung der ganzen erfin- dungsgemässen Vorrichtung.

Die der erfindungsgemässen Vorrichtung zu Grunde liegende Idee ist es, mittels der auf der Höhe des nachfolgend beschriebenen Tragschirms 1 und jener, auf der Höhe des ebenfalls nachfolgend beschriebenen Ankerschirmes 6, herrschenden Windrichtungen und -Stärken, also mittels des Winddifferenz-Vektors dem Tragschirm 1 den angestrebten Auftrieb zu verschaffen, und mittels dieses Auftriebs die Plattform zu tragen.

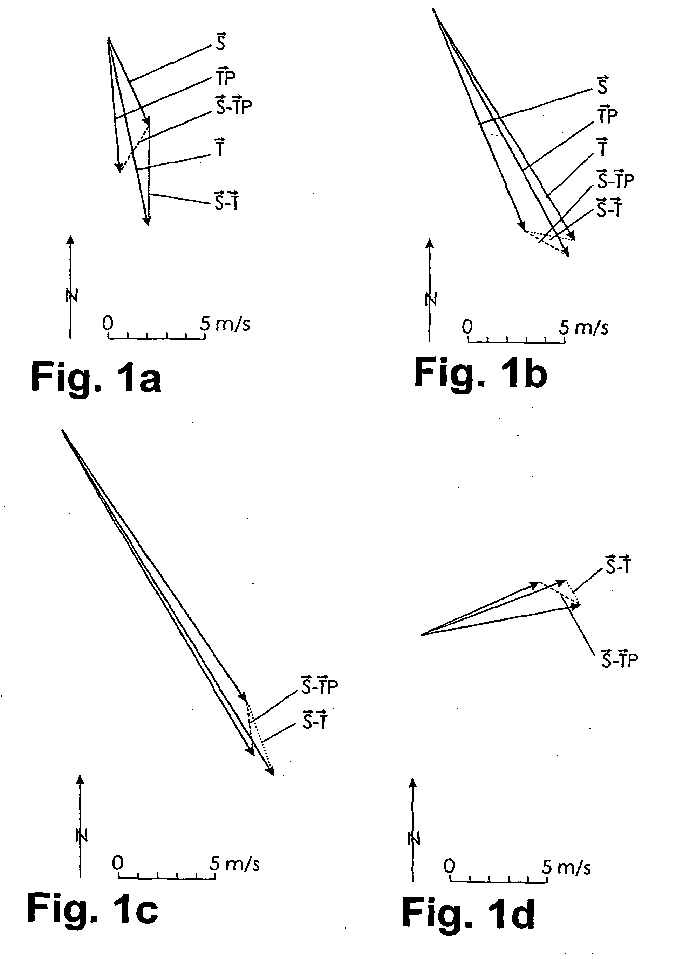

In den Figuren 1a bis 1d sind Windvektoren dargestellt, wie sie sich aus - meteorologisch zufällig ausgewählten - Radiosondierungen mit Aufstiegsort Payerne (CH) ergeben haben. Dargestellt sind jeweils ein Vektor $\vec{S}$ auf in der Stratosphäre (ausgezogen), ein Vektor $\vec{T}P$ in der Tropopause und ein Vektor $\vec{T}$ in der oberen Troposphäre. Ferner sind noch zwei Differenzvektoren

$$\bar{D}_{TP} = \bar{S} - \bar{T}P \text{ (gestrichelt)}$$

und

$$\vec{D}_T = \vec{S} - \vec{T} \quad (\text{gepunktet})$$

dargestellt. Die Daten der Sondierungen sind im Fuss der Fig. 1a - 1d festgehalten. Abgesehen vom Jahresgang unterliegt das Wetter keiner statistischen Regelmässigkeit; daher bietet die Auswahl der Sondierungsdaten statistische Zufälligkeit.

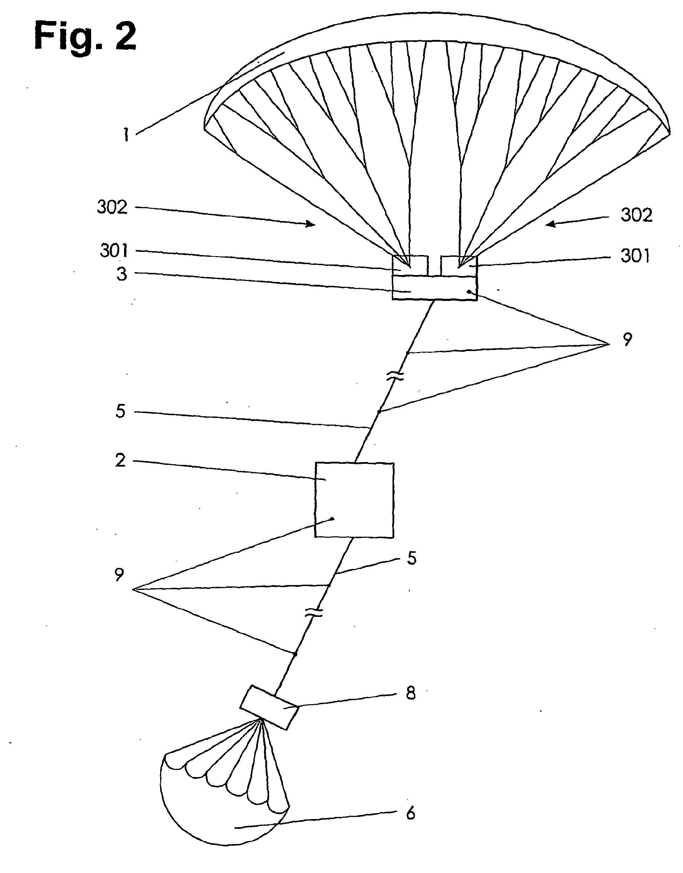

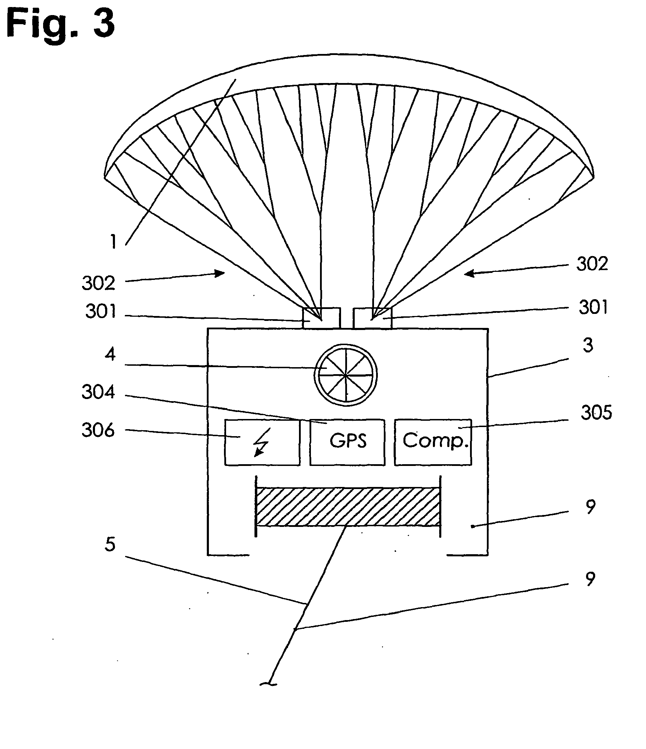

In einer vereinfachten Darstellung gemäss Fig. 2 ist der grundsätzliche Aufbau eines Ausführungsbeispiels der erfindungsgemässen Vorrichtung dargestellt. An einem Tragschirm 1 hängt eine Kapsel 2, welche sowohl die vorgesehene Ausrüstung an elektrischen und elektronischen Komponenten enthält, als auch zur Aufnahme einer Nutzlast eingerichtet ist. Die Kapsel 2 ist in Fig. 3 mehr im Detail dargestellt. An der Kapsel 2 sind, wie in Fig. 3 dargestellt, Organe zur Stromerzeugung angebracht, hier beispielsweise koaxial, aber in gegenläufiger Richtung drehende Windräder 4, und mit einem oder zwei Generatoren gekoppelt. Die Gegenläufigkeit der Windräder 4 verhindert einen ungewünschten, auf die Kapsel 2 wirkenden, Kreiseleffekt sowie Reaktionsmomente auf die Kapsel 2 und nachfolgend beschriebene Seile 5. An Stelle der Windräder 4 ist auch vorgesehen, die Kapsel 2 alternativ oder zusätzlich mit Solarzellen auszurüsten, deren erzeugte Energie über die Nacht in Batterien gespeichert werden kann. Ebenso kann die Oberfläche des Tragschirmes 1 mit ultradünnen und flexiblen Solarzellen belegt sein.

Sowohl oben, als auch unten an der Kapsel 2 sind Seile 5 angebracht. Das obere Seil 5 läuft zum Tragschirm 1, welcher die Kapsel 2 trägt. Dieser ist beispielsweise ein über Steuerleinen steuerbarer Flächenschirm, wie er auch aus der Gleitschirmfliegerei bekannt ist. Ebenfalls erfindungsgemäss ist der Einsatz eines anderen steuerbaren Flügels, beispielsweise mit pneumatischem Aufbau oder eines rigiden.

Anstelle eines einzigen Tragschirmes 1 ist auch der Einsatz von mehr als einem erfinderisch, wobei die mehrere Tragschirme 1 in der gleichen Windschicht, also auf gleicher Höhe, operieren. Wie in Fig. 3 im Detail dargestellt, hängt am Tragschirm 1 eine Steuer- und Antriebseinheit 3, welche einerseits oben aufgesetzt Steuerorgane 301 aufweist zum Betätigen von entsprechenden Leinen 302 des Tragschirmes 1, ferner eine Instrumenteneinheit mit Funkmitteln 303, einen GPS-Empfänger 304 und einen Rechner 305. Ferner ist eine Seilrolle 306 mit Antriebsmotor eingebaut, welche das Seil 5, das die Steuer- und Antriebseinheit 3 mit der Kapsel verbindet, auf- und abrollen kann. Energetisch ist die Steuer- und Antriebseinheit 3 autonom eingerichtet, wozu sie wiederum Windräder 4 und/oder Solarzellen trägt. Zur passiven Ortung durch den Flugverkehr trägt sowohl die Steuer- und Antriebseinheit 3 wie auch das Seil 5 eine genügende Anzahl von Radar-Transpondern 9 und oder Lüneburger Linsen.

Im unteren Teil der Kapsel 2 ist ein weiteres Seil 5 befestigt, an dessen unterem Ende ein Ankerschirm 6 an einem Steuerorgan 8 angebracht ist. Mit diesem Steuerorgan 8 kann die Entfaltung des Fallschirmes 6 gesteuert werden. Im Steuerorgan 8 ist eine weitere Seilrolle 306 mitsamt einem Antriebsmotor untergebracht. Es ist ebenfalls im Erfindungsgedanken enthalten, diese zweite, unter Seilrolle 306 in der Kapsel 2 anzuordnen. Ebenso weist das Steuerorgan 8 die für die Steuer- und Antriebseinheit 3 genannte Geräte auf, nämlich ein Steuerorgan 801 zum Betätigen einer (nicht dargestellte, aber an sich bekannten) Vorrichtung zum Variieren des Entfaltungsgrades des Ankerschirmes 6, Funkmittel 303, einen GPS-Empfänger 304 und einen Rechner 305. Die Funkmittel 303 dienen, wie bei der Steuer- und Antriebseinheit 3, zum Übermitteln der vom GPS-Empfänger festgestellten Koordinaten des Ankerschirmes 6, ferner zum Empfang von Steuerbefehlen an das Steuerorgan 8 für das Steuerorgan 801 und an den Motor der Seilrolle 306.

Das Seil besteht vorzugsweise aus Aramid-Fasern oder einem vergleichbaren zugfesten und dehnungsarmen Material. Die Länge des Seils 5 kann so gross gewählt werden, beispielsweise mehrere 100 m bis einige km, dass der Ankerschirm 6 sich in einer anderen Windströmung befindet - sowohl nach Richtung als auch nach Stärke - als der Tragschirm 1. Der Tragschirm 1 wird dann unter Berücksichtigung der Strömungswiderstände von Tragschirm 1 und Ankerschirm 6 vom Differenzvektor der Windgeschwindigkeiten auf der Höhe des Tragschirms 1 und des Ankerschirms 6 getragen. So kann beispielsweise der Tragschirm 1 oberhalb der Tropopause, und der Ankerschirm 6 in der Tropopause angeordnet oder auch in die Troposphäre verlegt werden. Durch geeignete Auswahl der Höhenlage von Tragschirm 1 und Ankerschirm 6 können leicht Winddif-ferenzvektoren $D_{TP}$ bzw. $D_T$ von 10m/sec und darüber gefunden werden.

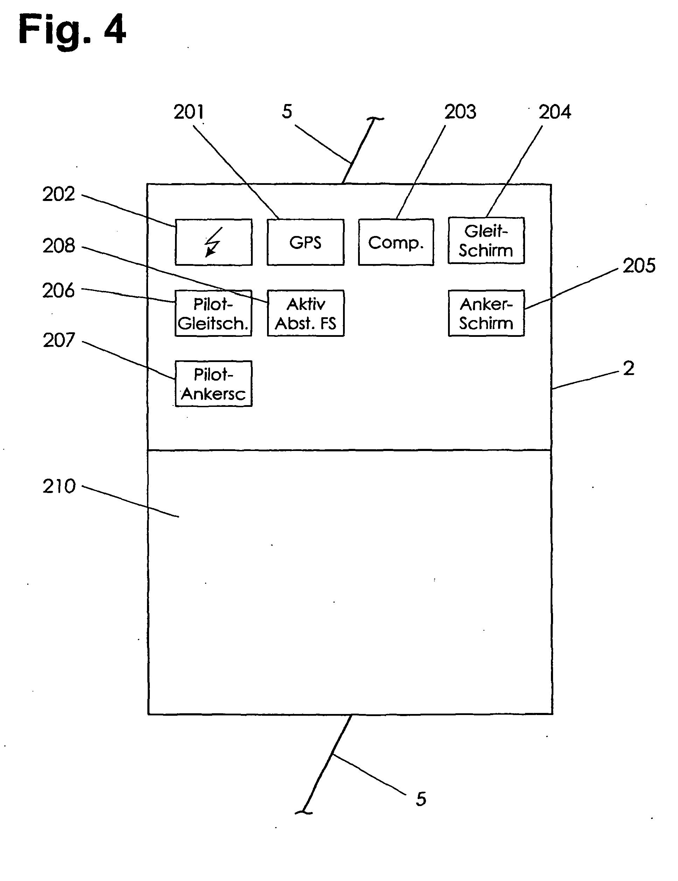

Die Darstellung der Station 2 gemäss Fig. 4 zeigt eine erfindungsgemässe Instrumentierung. Selbstverständlich kann diese Instrumentierung erweitert oder verändert werden, wenn andere Bedürfnisse dies angezeigt sein lassen.

Die Kapsel 2 ist in Fig. 4 im Detail aber schematisch dargestellt. Beispielsweise im oberen Teil der Kapsel sind die für den Betrieb der erfindungsgemässen Vorrichtung notwendigen Funktionsgruppen angeordnet. Ein GPS-Empfänger 201 ermittelt die Koordinaten der Kapsel 2, eine Funkeinheit 202 für den gesamten Funkverkehr auf allen vorgesehenen Frequenzen, ein Rechner 203 ("Computer") für alle Ermittlungs- und Steuerfunktionen von Tragschirm 1 und Ankerschirm 6, und weitere nachstehend noch beschriebene Funktionen.

Im beispielsweise, aber keinesfalls ausschliesslich, unteren Teil der Kapsel 2 befinden sich Raum und die nicht dargestellten Anschlüsse für Strom und Datenleitungen für eine Nutzlast. Eine solche vorgesehene Nutzlast kann beispielsweise bestehen aus Instrumenten, Geräten und Apparaten für wissenschaftliche und technologische Aufgaben und Experimente. Anstatt in der Kapsel 2 kann die Nutzlast, allenfalls einschliesslich dazu vorgesehener Antennen, auch an der Kapsel 2 angehängt werden.

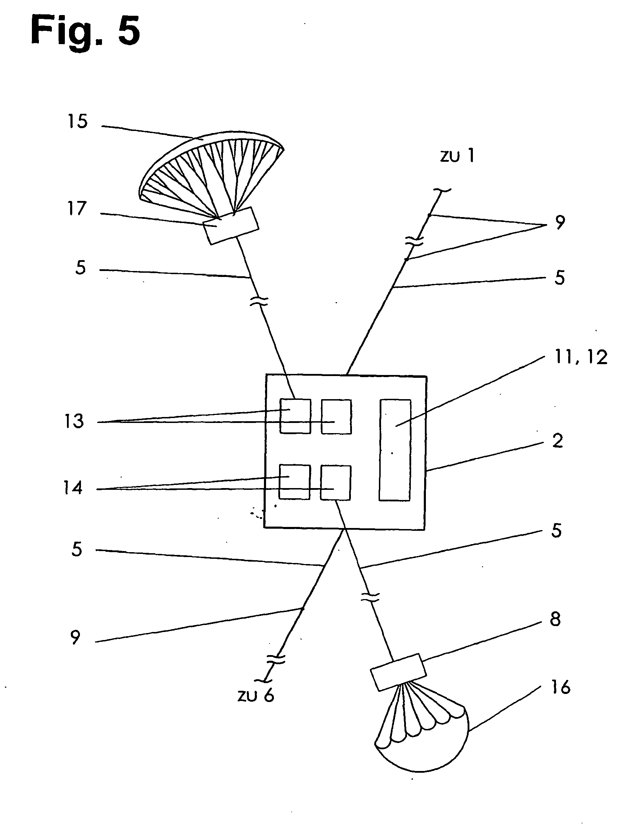

Auf der Grundlage von Fig. 2 sind in Fig. 5 weitere, erfindungsgemässe Ergänzungen dargestellt. Die Kapsel 2 ist hier wiederum vereinfacht dargestellt. In Fig. 5 sind, neben einem Behälter 12 für einen Abstiegs-Fallschirm 11, noch mehrere Behälter 13, 14 dargestellt. Die Behälter 13 enthalten je einen sog. Pilot-Gleitschirm 15. Diese können ausgefahren werden, wenn das Bedürfnis besteht, die Windrichtung in Luftschichten oberhalb der Station zu ermitteln. Jeder Pilot-Gleitschirm 15 trägt eine Steuereinheit 17 - vorzugsweise mit integrierter Stromerzeugung, wie beschrieben. Der Pilot-Gleitschirm 15 ist vereinfacht dargestellt, weist jedoch alle notwendigen Merkmale zur Beeinflussung der Flugrichtung und des Anstellwinkels auf, wie für den Tragschirm 1 beschrieben. Vorzugsweise ist die notwendige Seilrolle 306 mit Antriebsmotor ebenfalls in der Steuereinheit 17 eingebaut. An Stelle von Gleitschirmen können selbstverständlich auch für deren Zweck adäquate steuerbare Rundschirme eingesetzt werden, wie sie für das sog. Parasailing verwendet werden. Ebenfalls erfindungsgemäss ist die Verwendung von nicht elastisch beanspruchten Gasballonen, für welche in der Kapsel 2 eine Füll- und Leerstation vorgesehen werden kann.

In der Steuereinheit 17 ist wiederum ein GPS-Empfänger und Funksender/Empfänger eingebaut zur Ortsbestimmung und Übermittlung der Daten und für den Empfang notwendiger Steuerbefehle. Die Steuerung des Pilotgleitschirmes 15 erfolgt rechnergestützt durch den Rechner 203. Analog zu den PilotGleitschirmen 15 zur Sondierung der oberhalb der Kapsel 2 herrschenden Windverhältnisse, sind in den Behältern 14 Pilot-Ankerschirme 16 untergebracht. Diese sind ebenfalls mit Steuerorganen 8 ausgestattet, welche alle bereits erwähnten Elemente enthalten können einschliesslich der Stromversorgung. Über deren mittels GPS ermittelten Koordinaten kann durch den Rechner 306 und in Bezug auf die Koordinaten der Kapsel 2 die Abdrift auf Grund der in tiefergelegenen Luftschichten herrschenden Windverhältnisse ermittelt werden.

Es ist ebenfalls erfindungsgemäss je einen Pilotgleitschirm 15 und einen Pilotankerschirm 16 zur Symmetrisierung der auf die Kapsel 2 wirkenden Kräfte jeweils gleich weit auszufahren. Ebenso können deren Seilrollen in der Kapsel 2 angeordnet werden. Auch die Pilotankerschirme können als Tragschirme ausgebildet sein; entweder wie der Tragschirm 1 oder die Pilotgleitschirme 15.

Auch an Stelle der Ankerschirme 6 können genannte Ballons vorgesehen werden, deren Nettoauftrieb kleiner gewählt wird, so dass sie sich von der Kapsel 2 nach unten bewegen.

Es ist ebenfalls erfindungsgemäss, die Kapsel 2 direkt mit dem Steuer- und Antriebsorgan 3 zu verbinden, und die dort angeordneten Organe - unter Weglassen der Seilrolle 306 und des zum Tragschirm 1 gehörigen GPS-Empfängers 304 - in die Kapsel 2 zu integrieren.

Anstelle von Pilotgleitschirmen 15 und/oder Pilotankerschirmen 16 kann auch der Einsatz eines LIDAR-Systems (LIDAR = Light Detection And Ranging) vorgesehen werden oder allgemein ein geeignetes optoelektronisches System. Ein solches System ist, allenfalls auf einer stabilisierten Plattform, auf, bzw. in der Kapsel 2 angeordnet.

Mittels kohärenter Laserpulse kann ein LIDAR-System die Geschwindigkeit und die Richtung von Windströmungen einschliesslich deren Lage im Raum ermitteln. Solche Systeme sind an sich bekannt.

In ihre Soll-Position kann die Kapsel 2 gebracht werden entweder durch einen Bodenstart am Tragschirm 1, durch einen Aerostaten, durch ein Flugzeug oder durch eine Rakete. Für alle Transportarten sind die notwendigen Steuerbefehle entweder im Rechner 203 voreingestellt, oder können manuell durch Funk an die Kapsel 2 übermittelt werden.

Die Kapsel 2 kann zum Boden zurückkehren entweder am Tragschirm 1 oder aber an einem Fallschirm 11, welcher im Behälter 12 gemäss Fig. 5 verstaut ist. Dieser Fallschirm 11 kann sowohl für einen geplanten, als auch für einen Notabstieg der Kapsel 2 verwendet werden. Wiederum können für den Fallschirm 11 steuerbare Flach- oder Rundschirme zur Verwendung gelangen. Falls die Kapsel 2 mittels des Seiles 5 mit dem Tragschirm 1 verbunden ist, ist vor dem Abstieg vorteilhafterweise das Seil 5 einzufahren, damit die Kapsel direkt mit dem Tragschirm 1 verbunden ist und für den Abstieg das System Tragschirm 1 - Kapsel 2 mittels der Steuerung des Tragschirmes 1 sanft gelandet werden kann.

**Patentansprüche**

1. Autonome Stratosphären-Plattform mit einem Tragflügel zum Tragen von Nutzlasten, wobei

 - ein Steuer und Antriebsorgan (3) für die Steuerung des Tragflügels (1) durch Leinen (302) mittels Steuerorganen (301) vorhanden und vom Tragflügel (1) getragen wird,
 - eine Kapsel (2) für die notwendige Instrumentierung und Nutzlast (210) vorhanden und vom Steuer- und Antriebsorgan (3) getragen wird, **dadurch gekennzeichnet, dass** ein erstes Seil (5) an der Kapsel befestigt ist, das ein weiteres Steuerorgan (8) trägt, und ein Ankertragflügel (6) vorhanden ist, der im Betrieb mit dem Tragflügel (1) zusammenwirkt, wobei der Ankertragflügel (6) mit dem weiteren Steuerorgan (8) verbunden ist, welches durch Steuern des Ankertragflügels (6) dessen Luftwiderstand und/oder Auftrieb einstellen kann, sodass aufgrund des Winddifferenz-Vektors zwischen dem Wind auf der Höhe des Tragschirms (1) und dem Wind auf der Höhe des Ankertragflügels (6) ein Auftrieb zum Tragen der Plattform erzeugbar ist.

2. Autonome Stratosphären-Plattform nach Patentanspruch 1, **dadurch gekennzeichnet, dass**

    - ein weiteres Seil (5) vorhanden ist, mit welchem die Kapsel (2) am Steuer- und Antriebsorgan (3) befestigt ist und von ihm getragen wird,
    - eine Seilrolle (306) mit Antriebsmotor im Steuer- und Antriebsorgan (3) vorhanden ist, mit welcher die Länge des weiteren Seils (5) verändert werden kann.

3. Autonome Stratosphären-Plattform nach Patentanspruch 2, **dadurch gekennzeichnet, dass** im Steuer- und Antriebsorgan (3) weiter vorhanden sind:

    - eine Stromversorgungseinheit mit Windgeneratoren (4) oder mit Solarzellen,
    - ein GPS-Empfänger (304), ein Rechner (305) und Funkmitteln (303).

4. Autonome Stratosphären-Plattform nach Patentanspruch 1, **dadurch gekennzeichnet, dass** in dem weiteren Steuerorgan (8) vorhanden sind:

    - eine Stromversorgungseinheit mit Windgeneratoren (4) oder Solarzellen
    - eine Seilrolle (306) mit Antriebsmotor,
    - ein GPS-Empfänger (304), ein Rechner (305) und Funkmittel (303),
    - ein Steuerorgan (801) zum Variieren des Entfaltungsgrades und/oder Antriebs des Ankertragflügels (6).

5. Autonome Stratosphären-Plattform nach Patentanspruch 1, **dadurch gekennzeichnet, dass** in der Kapsel (2) mindestens folgende Einheiten vorhanden sind:

    - ein GPS-Empfänger (201) zur Ermittlung der Koordinaten der Kapsel (2),
    - eine Funkeinheit (202) für den Funkverkehr auf allen vorgesehenen Frequenzen und zum Übermitteln von Steuerbefehlen an das Steuer- und Antriebsorgan (3) und das Steuerorgan (8),
    - ein Rechner (203) mindestens für alle Ermittlungs- und Steuerfunktionen von Tragflügel (1) und Ankertragflügel (6),
    - eine Steuereinheit (204) für den Tragflügel (1),
    - eine Steuereinheit (204) für den Ankertragflügel (6),
    - eine Steuereinheit (205) für den Ankertragflügel (6),
    - Aktivierungseinheiten (206, 207, 208) für PilotGleitschirme (15), für Pilot-Ankerschirme (16) und für einen Abstiegs-Fallschirm (11).

6. Autonome Stratosphären-Plattform nach Patentanspruch 5, **dadurch gekennzeichnet, dass** die Kapsel (2) ein LIDAR Doppler-System oder optoelektronisches System trägt, mit welchem Richtung und Stärke von Luftströmungen in einer ausgewählten Luftschicht ermittelt werden können.

7. Autonome Stratosphären-Plattform nach Patentanspruch 5, **dadurch gekennzeichnet, dass** in der Kapsel (2) Raum vorhanden ist für Instrumentierungen von wissenschaftlichen und technologischen Experimenten zusammen mit den notwendigen Anschlüssen für Strom- und Datenleitungen.

8. Autonome Stratosphären-Plattform nach Patentanspruch 1, **dadurch gekennzeichnet, dass** der Tragflügel (1) als Tragschirm und/oder der Ankertragflügel (6) als Ankerschirm ausgebildet ist, wobei der Ankerschirm mit dem weiteren Steuerorgan (8) verbunden ist, welches durch Beeinflussen der Entfaltung des Ankerschirmes dessen Luftwiderstand und/oder Auftrieb einstellen kann.

9. Autonome Stratosphären-Plattform nach Patentanspruch 5, **dadurch gekennzeichnet, dass** die Pilot-Ankerschirme (16) als steuerbare Flügel als ausgebildet sind.

10. Autonome Stratosphären-Plattform nach Patentanspruch 8, **dadurch gekennzeichnet, dass**

    - die Kapsel (2) Behälter (13, 14) trägt für Pilotgleitschirme (15) und Pilotankerschirme (16),
    - die Pilotgleitschirme (15) je eine Steuereinheit (17) tragen, welche im Wesentlichen gleich ausgerüstet ist, wie die Steuer- und Antriebseinheit (3),
    - die Pilotankerschirme (16) von einem Steuerorgan (8) getragen werden.

11. Autonome Stratosphären-Plattform nach Patentanspruch 8, **dadurch gekennzeichnet, dass** die Kapsel ferner einen Behälter (12) trägt, in welchem ein Fallschirm (11) verstaut ist, an welchem die Höhen-Messplattform zum Boden zurückkehren kann.

12. Autonome Stratosphären-Plattform nach Patentanspruch 6, **dadurch gekennzeichnet, dass** die Kapsel (2) Behälter (13, 14) trägt für die Aufnahme von Pilotballonen, mit welchen die Windverhältnisse in Luftschichten über und unter der Kapsel (2) sondiert werden können, wobei die Pilotballone je eine Steuereinheit (17) tragen, welche im Wesentlichen gleich ausgerüstet ist, wie die Steuer- und Antriebseinheit (3).

13. Autonome Stratosphären-Plattform nach Patentanspruch 11, **dadurch gekennzeichnet, dass** die Behälter (13, 14) je eine Vorrichtung aufweisen, mit welcher ein Pilotballon befüllt und/oder entleert werden kann.

**Claims**

1. An autonomous stratosphere platform having an aerofoil for carrying payloads, wherein

   - a control and drive unit (3) for controlling the aerofoil (1) by lines (302) by means of control units (301) is provided and carried by the aerofoil (1),
   - a capsule (2) for the necessary instrumentation and payload (210) is provided and carried by the control and drive unit (3),
   **characterised in that** a first cable (5) is fastened to the capsule (2), this first cable carrying a further control element (8), and an anchoring aerofoil (6) is provided which when operating with the aerofoil (1), provides this with the desired lift, wherein the anchoring aerofoil (6) is connected to the further control element (8), which, by controlling the anchoring aerofoil (6), can set its air resistance and/or lift.

2. The autonomous stratosphere platform according to patent claim 1, **characterised in that**

   - a further cable (5) is provided, by which means the capsule (2) is fastened to the control and drive unit (3) and carried thereby,
   - a pulley (306) having a drive motor is provided in the control and drive unit (3), by which means the length of the further cable (5) can be changed.

3. The autonomous stratosphere platform according to patent claim 2, **characterised in that** the following are also provided in the control and drive unit (3):

   - a power supply unit having wind generators (4) or having solar cells,
   - a GPS receiver (304), a computer (305) and radio means (303).

4. The autonomous stratosphere platform according to patent claim 1, **characterised in that** the following are provided in the further control element (8):

   - a power supply unit having wind generators (4) or solar cells,
   - a pulley (306) having a drive motor,
   - a GPS receiver (304), a computer (305) and radio means (303),

   - a control element (801) for varying the degree of unfolding and/or lift of the anchoring aerofoil (6).

5. The autonomous stratosphere platform according to patent claim 1, **characterised in that** at least the following units are provided in the capsule (2):

   - a GPS receiver (201) for determining the coordinates of the capsule (2),
   - a radio unit (202) for the radio traffic on all provided frequencies and for transmitting control commands to the control and drive unit (3) and the control element (8),
   - a computer (203) at least for all determination and control functions of aerofoil (1) and anchoring aerofoil (6),
   - a control unit (204) for the aerofoil (1),
   - a control unit (205) for the anchoring aerofoil (6),
   - activation units (206, 207, 208) for pilot paragliders (15), for pilot anchoring shields (16), and for a descent parachute (11).

6. The autonomous stratosphere platform according to patent claim 5, **characterised in that** the capsule (2) carries a LIDAR Doppler system or optoelectronic system, by which means the direction and strength of air flows in a selected air layer can be determined.

7. The autonomous stratosphere platform according to patent claim 5, **characterised in that** space is provided in the capsule (2) for instrumentation of scientific and technological experiments together with the necessary terminals for power and data lines.

8. The autonomous stratosphere platform according to patent claim 1, **characterised in that** the aerofoil (1) is configured as a carrying shield and/or the anchoring aerofoil (6) is configured as an anchoring shield, wherein the anchoring shield is connected to the further control element (8), which by influencing the unfolding of the anchoring shield can set its air resistance and/or lift.

9. The autonomous stratosphere platform according to patent claim 5, **characterised in that** the pilot anchoring shields (16) are configured as controllable wings.

10. The autonomous stratosphere platform according to patent claim 8, **characterised in that**

    - the capsule (2) carries containers (13, 14) for pilot paragliders (15) and pilot anchoring shields (16),
    - the pilot paragliders (15) each carry a control unit (17), which is equipped substantially identically to the control and drive unit (3),
- the pilot anchoring shields (16) are carried by a control element (8).

11. The autonomous stratosphere platform according to patent claim 8, **characterised in that** the capsule also carries a container (12), in which a parachute (11) is stowed, on which the high-altitude measuring platform can return to the ground.

12. The autonomous stratosphere platform according to patent claim 6, **characterised in that** the capsule (2) carries containers (13, 14) for receiving pilot balloons, by which means the wind conditions in air layers above and below the capsule (2) can be probed, wherein the pilot balloons each carry a control unit (17), which is equipped substantially identically to the control and drive unit (3).

13. The autonomous stratosphere platform according to patent claim 11, **characterised in that** the containers (13, 14) each have a device, by which means a pilot balloon can be filled and/or emptied.


**Revendications**

1. Plateforme stratosphérique autonome comprenant une aile portante pour porter des charges utiles, sachant que

    - une organe de commande et d'entraînement (3) pour commander l'aile portante (1) par des filins (302) au moyen d'organes de commande (301) est prévu et est porté par l'aile portante (1),
    - une capsule (2) pour les instruments indispensables et la charge utile (210) est prévue et est portée par l'organe de commande et d'entraînement (3),
    **caractérisée en ce qu'**un premier câble (5) est fixé sur la capsule (2), lequel porte un organe de commande (8) supplémentaire, et une aile portante d'ancrage (6) est prévue, qui en fonctionnant avec l'aile portante (1), lui procure la portance visée, sachant que l'aile portante d'ancrage (6) est reliée à l'autre organe de commande (8), lequel peut régler la résistance à l'air et/ou la portance de l'aile portante d'ancrage (6) en la commandant.

2. Plateforme stratosphérique autonome selon la revendication 1, **caractérisée en ce que :**

    - un câble supplémentaire (5) est prévu avec lequel la capsule (2) est fixée sur l'organe de commande et d'entraînement (3) et est portée par celui-ci,
    - un rouleau de câble (306) avec un moteur d'entraînement est prévu dans l'organe de commande et d'entraînement (3), avec lequel la longueur du câble (5) supplémentaire peut être modifiée.

3. Plateforme stratosphérique autonome selon la revendication 2, **caractérisée en ce que** sont en outre prévus :

    - une unité d'alimentation électrique avec des éoliennes (4) ou des cellules solaires,
    - un récepteur GPS (304), un ordinateur (305) et des moyens radio (303).

4. Plateforme stratosphérique autonome selon la revendication 1, **caractérisée en ce que** sont en outre prévus dans l'organe de commande supplémentaire (8) :

    - une unité d'alimentation électrique avec des éoliennes (4) ou des cellules solaires,
    - un rouleau de câble (306) avec un moteur d'entraînement,
    - un récepteur GPS (304), un ordinateur (305) et des moyens radio (303),
    - un organe de commande (801) pour varier le degré de déploiement et/ou l'entrainement de l'aile portante d'ancrage (6).

5. Plateforme stratosphérique autonome selon la revendication 1, **caractérisée en ce qu'**au moins les unités suivantes sont prévues dans la capsule (2),

    - un récepteur GPS (201) pour calculer les coordonnées de la capsule (2),
    - une unité radio (202) pour la communication radio sur toutes les fréquences prévues et pour transmettre des ordres de commande à l'organe de commande et d'entraînement (3),
    - un ordinateur (203) au moins pour toutes les fonctions de calcul et de commande de l'aile portante (1) et de l'aile portante d'ancrage (6),
    - une unité de commande (204) pour l'aile portante (1),
    - une unité de commande (205) pour l'aile portante d'ancrage (6),
    - des unités d'activation (206, 207, 208) pour les parapentes de pilote (15), les boucliers d'ancrage de pilote (16) et pour un parachute de descente (11).

6. Plateforme stratosphérique autonome selon la revendication 5, **caractérisée en ce que** la capsule (2) porte un système de doppler LIDAR ou un système optoélectronique avec lequel la direction et la puissance des courants atmosphériques peuvent être calculées dans une couche d'air sélectionnée.

7. Plateforme stratosphérique autonome selon la revendication 5, **caractérisée en ce que** dans la capsule (2), de l'espace est prévu pour les instruments des expériences scientifiques et technologiques ainsi que les branchements indispensables pour les câbles d'électricité et de données.

8. Plateforme stratosphérique autonome selon la revendication 1, **caractérisée en ce que** l'aile portante (1) est un bouclier portant et/ou que l'aile portante d'ancrage (6) est un bouclier d'ancrage, sachant que le bouclier d'ancrage est relié à l'organe de commande (8) supplémentaire, lequel peut régler la résistance à l'air et/ou la portance du bouclier d'ancrage en influençant son déploiement.

9. Plateforme stratosphérique autonome selon la revendication 5, **caractérisée en ce que** les boucliers d'ancrage (16) sont des ailes pouvant être commandées.

10. Plateforme stratosphérique autonome selon la revendication 8, **caractérisée en ce que**

   - la capsule (2) porte des conteneurs (13, 14) pour des parapentes de pilote (15) et des boucliers d'ancrage (16),
   - les parapentes de pilote (15) portent chacun une unité de commande (17), qui est essentiellement équipée de la même manière que l'organe de commande et d'entraînement (3),
   les boucliers d'ancrage (16) sont portés par un organe de commande (8).

11. Plateforme stratosphérique autonome selon la revendication 8, **caractérisée en ce que** la capsule porte en outre un conteneur (12) dans lequel un parachute (11) est rangé, sur lequel la plateforme de mesure de la hauteur peut retourner au sol.

12. Plateforme stratosphérique autonome selon la revendication 6, **caractérisée en ce que** la capsule (2) porte des conteneurs (13, 14) pour recevoir des ballons de pilote, avec lesquels les rapports de vent dans les couches d'air peuvent être sondés au-dessus et au-dessous de la capsule (2), sachant que les ballons de pilote portent chacun une unité de commande (17) qui est essentiellement équipée de la même manière que l'organe de commande et d'entraînement (3).

13. Plateforme stratosphérique autonome selon la revendication 11, **caractérisée en ce que** les conteneurs (13, 14) présentent chacun un dispositif avec lequel un ballon de pilote peut être rempli et/ou vidé.

Fig. 1a

Fig. 1b

Fig. 1c

Fig. 1d

# Fig. 2

# Fig. 3

# Fig. 4

# Fig. 5

**EP 2 007 624 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03018401 A

- US 2005023555 A